# EUROPÄISCHE PATENTSCHRIFT

(11) **EP 2 321 149 B1**
(45) Veröffentlichungstag und Bekanntmachung des Hinweises auf die Patenterteilung: **01.05.2013**
(21) Anmeldenummer: 10730089.9
(22) Anmeldetag: 24.06.2010
(51) Int. Cl.: B60N 2/50

(54) **FAHRZEUGSITZ, INSBESONDERE NUTZFAHRZEUGSITZ**
VEHICLE SEAT, IN PARTICULAR COMMERCIAL VEHICLE SEAT
SIÈGE POUR VÉHICULE, EN PARTICULIER POUR VÉHICULE UTILITAIRE

(30) Priorität: 02.07.2009 DE 102009031415
(43) Veröffentlichungstag der Anmeldung: 18.05.2011
(73) Patentinhaber: KEIPER GmbH & Co. KG, 67657 Kaiserslautern (DE)
(72) Erfinder: ENNS, Viktor, 67655 Kaiserslautern (DE); WEBER, Thomas, 67659 Kaiserslautern (DE); GUNDALL, Thomas, 66851 Queidersbach (DE)
(74) Vertreter: Kalkoff & Partner
(86) Internationale Anmeldenummer: PCT/EP2010/003889
(87) Internationale Veröffentlichungsnummer: WO 2011/000526

(56) Entgegenhaltungen:
- EP-A2- 1 527 946
- WO-A1-88/09270
- JP-A- 6 316 233
- JP-U- 63 098 228
- US-A- 5 251 864

## Beschreibung

Die Erfindung betrifft einen Fahrzeugsitz, insbesondere Nutzfahrzeugsitz, mit den Merkmalen des Oberbegriffs des Anspruches 1.

Ein Fahrzeugsitz dieser Art ist aus der US 5,251,864, A bekannt. Die beiden vorderen Querrohre sind mittels Rollen in den zugeordneten Rahmen beweglich. Für zusätzliche Horizontalschwingen ist das die zweiten Schwingen verbindende, hintere Querrohr im Unterrahmen an einem Schlitten gelagert. Der Schlitten ist mittels Rollen am Unterrahmen beweglich gelagert und mittels zweier, eine Schwingvorrichtung bildene Federn relativ zum Unterrahmen schwingfähig. Das die ersten Schwingen verbindende hintere Querrohr ist im Oberrahmen gelagert, wobei das Lager aufgrund der Elastizität theoretisch kleine Auslenkungen zulässt und bei größeren Auslenkungen durch plastische Verformung theoretisch dämpft.

Die JP 6-316233 A beschreibt einen Fahrzeugsitz, bei dem die hinteren Querrohre feste Lager aufweisen, während die vorderen Querrohre beweglich in den zugeordneten Rahmen gelagert sind. Das die ersten Schwingen verbindende vordere Querrohr ist zudem mittels einer Schwingvorrichtung, bestehend aus je einer Feder in Sitzlängsrichtung vor und hinter dem Querrohr, schwingfähig relativ zum Unterrahmen.

In der JP 63-98228 U ist ein Fahrzeugsitz offenbart, bei dem das die zweiten schwingen verbindende untere Querrohr mittels einer Schwingvorrichtung schwingfähig im Unterrahmen gelagert ist. Die Schwingvorrichtung besteht aus je einer Feder in Sitzlängsrichtung vor und hinter dem Querrohr oder alternativ aus einem Gummiblock, in welchem das Querrohr gelagert ist.

Ein durch Benutzung bekannter Fahrzeugsitz weist als ein viskoelastisches Element einen Querstab auf, welcher endseitig am Oberrahmen und mittig am hinteren Querrohr befestigt ist, um Schwingungen des Scherengestells in Sitzlängsrichtung zu dämpfen. Aus der nachveröffentlichten DE 10 2008 023 121 A1 ist ein Fahrzeugsitz beschrieben, bei dem das Querrohr mittels zweier dämpfender Elementen aus einem Elastomer in einer Lagervorrichtung am Oberrahmen gelagert und dadurch in Sitzlängsrichtung schwingfähig ist.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Aufgrund der Schwingvorrichtung kann das Scherengestell Schwingungen in Sitzlängsrichtung, d.h. Horizontalschwingungen des Oberrahmens relativ zum Querrohr, aufnehmen, die bei kleinen Auslenkungen ungedämpft sind und erst bei großen Auslenkungen durch die Lagervorrichtung zwischen Oberrahmen und Querrohr gedämpft werden. Dies steigert den Sitzkomfort, indem der Insasse von Kraftstößen auf das Sitzgestell isoliert wird. Um bei großen Kraftstössen die Auslenkungen sanft zu beschränken, wirkt die Lagervorrichtung dämpfend.

In einer konstruktiv einfachen Ausbildung weist die Schwingvorrichtung vorzugsweise einen Anker auf, der mittels Federn aufgehängt ist. Der Anker ist vorzugsweise am Querrohr angelenkt, so dass die Federn zwischen Anker und Oberrahmen wirken.

Die Lagervorrichtung weist eine Führung mit einer Führungsbahn für eine Lagerrolle des Querrohrs auf. Eine Dämpfung, d.h. Energiedissipation, erfolgt mittels seitlich der Führungsbahn angeordneten Endanschlägen der Lagervorrichtung, die vorzugsweise aus einem Elastomer gefertigt sind. Die Führung kann als weitgehend geschlossene Einheit mit Führungsbahn und Endanschlägen im Inneren ausgebildet sein, in welche das Querrohr durch eine Öffnung hineinragt. Eine solche Lagervorrichtung kann an beiden Enden des Querrohrs vorgesehen sein.

Wenn in Abhängigkeit von der Fahrsituation keine Schwingungsisolierung gewünscht ist, kann mittels einer Verriegelungsvorrichtung das Querrohr mit dem zugeordneten Oberrahmen verriegelt werden, worauf die Horizontalschwingungen unterdrückt werden. Vorzugsweise ist hierzu ein Verriegelungshebel vorgesehen, welcher vorgespannt und mittels beispielsweise eines Bowdenzuges schwenkbar ist.

Der Begriff "Querrohr" soll nicht auf kreisförmige Querschnitte und auf hohle Profile beschränkt sein, sondern allgemein das die Schwingen verbindende Bauteil (oder ein damit wiederum verbundenes Bauteil, beispielsweise ein Zapfen in Sitzquerrichtung) bezeichnen. Die Kombination von Lagervorrichtung und Schwingvorrichtung kann statt zwischen Oberrahmen und Querrohr alternativ oder zusätzlich zwischen Unterrahmen und Querrohr vorgesehen sein. Die Lagervorrichtung ist vorzugsweise auf beiden Fahrzeugsitzseiten, die Schwingvorrichtung vorzugsweise auf genau einer Fahrzeugsitzseite vorgesehen.

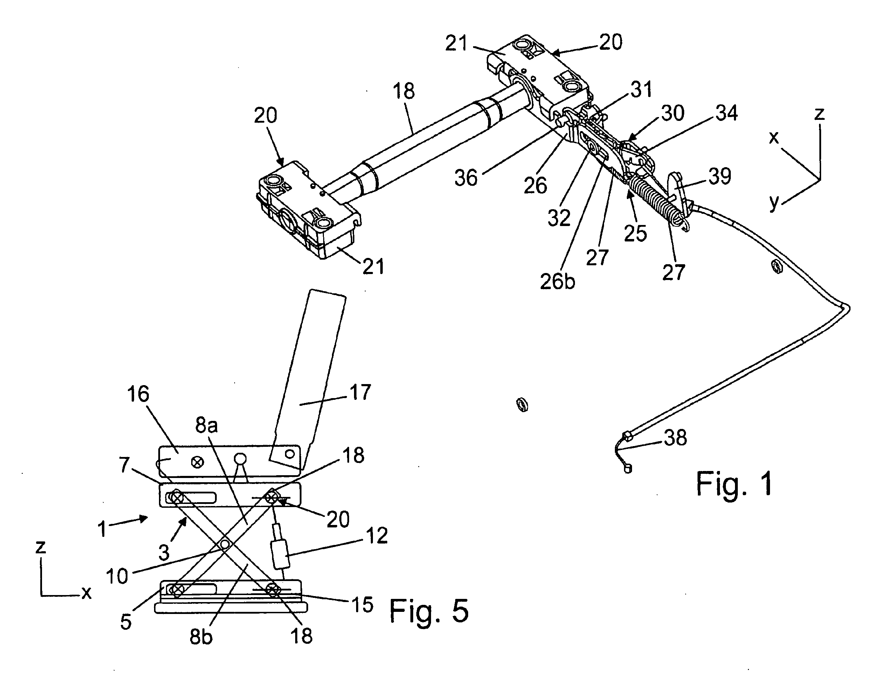

Im folgenden ist die Erfindung anhand eines in der Zeichnung dargestellten Ausführungsbeispiels näher erläutert. Es zeigen
- Fig. 1: eine perspektivische Teilansicht des Ausführungsbeispiels mit zwei Lagervorrichtungen, Schwingvorrichtung und Verriegelungsvorrichtung,

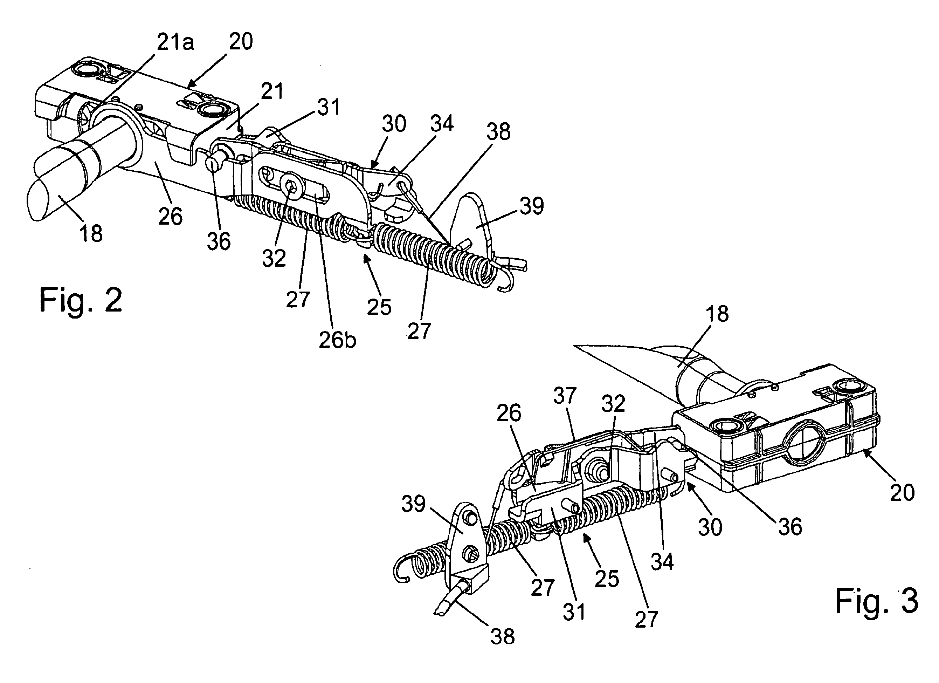

- Fig. 2: eine weitere perspektivische Teilansicht,
- Fig. 3: eine andere perspektivische Teilansicht,

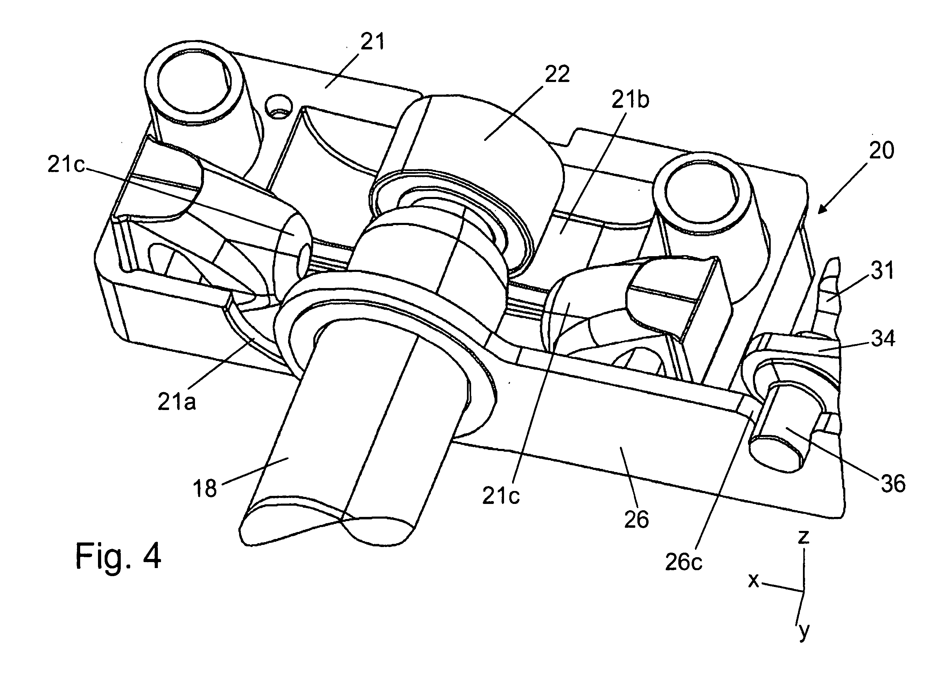

- Fig. 4: eine teilweise geschnittene Ansicht der Lagervorrichtung, und
- Fig. 5: eine schematische Seitenansicht des Ausführungsbeispiels.

Ein Fahrzeugsitz 1 für ein Nutzfahrzeug oder ein anderes Kraftfahrzeug weist ein Scherengestell 3 auf, welches einen Unterrahmen 5, einen oberhalb desselben angeordneten Oberrahmen 7 und beidseitig je ein Paar gekreuzter Schwingen 8a und 8b umfasst. Eine Scherenachse 10 verbindet die beiden Kreuzungspunkte und definiert zugleich die in Sitzquerrichtung y verlaufende Achse, um welche die Schwingen 8a und 8b relativ zueinander schwenken können. Die Schwingen 8a und 8b sind jeweils an ihrem hinteren Ende am Unterrahmen 5 bzw. am Oberrahmen 7 - auf eine später genauer beschriebene Weise - drehbar gelagert und weisen jeweils an ihrem vorderen Ende drehbare Rollen auf, mittels denen sie im oder am Oberrahmen 7 bzw. Unterrahmen 5 in Sitzlängsrichtung x beweglich geführt sind. Durch diese Bewegung der Schwingen 8a und 8b ändert sich die Höhe des Oberrahmens 7 über dem Unterrahmen 5, im folgenden kurz als Höhe des Scherengestells 3 bezeichnet. Mittels einer Feder 12 und vorzugsweise eines Dämpfers wird das Scherengestell 3 ein schwingfähiges System, welches den Sitzkomfort erhöht. Die Hauptschwingrichtung des Scherengestells 3, welche im Idealfall der Vertikalen entspricht, sei mit z bezeichnet.

Das Scherengestell 3 ist vorliegend mittels Sitzschienen 15 in Sitzlängsrichtung x verschiebbar, womit der Fahrzeugsitz 1 längseinstellbar ist, d.h. seine Sitzlängsposition einstellbar ist. Der Fahrzeugsitz 1 weist ferner einen Sitzrahmen 16 auf, welcher einerseits in seinem hinteren Bereich am Oberrahmen 7 beidseitig angelenkt ist und andererseits in seinem vorderen Bereich mittels eines Neigungseinstellers anhebbar und absenkbar und damit in seiner Neigung relativ zum Scherengestell 3 einstellbar ist. Der Fahrzeugsitz 1 weist noch eine Lehne 17 auf, welche am Sitzrahmen 16 (oder alternativ am Oberrahmen 7) - vorliegend neigungseinstellbar - angebracht ist.

Die beiden Paare gekreuzter Schwingen 8a und 8b umfassen jeweils eine erste Schwinge 8a und eine zweite Schwinge 8b, wobei die Innenseite der ersten Schwinge 8a und die Außenseite der zweiten Schwinge 8b einander zugewandt sind. Die beiden ersten Schwingen 8a sind an ihrem hinteren, vorliegend dem oberen Ende miteinander fest verbunden mittels eines Querrohrs 18, welches parallel zur Scherenachse 10 in Sitzquerrichtung y verläuft. Das Querrohr 18 ist beidseitig mittels je einer Lagervorrichtung 20 am Oberrahmen 7 gelagert. Die beiden zweiten Schwingen 8b sind an ihrem hinteren, vorliegend dem unteren Ende miteinander fest verbunden mittels eines Querrohrs 18 drehbar am Unterrahmen 5 gelagert. Das letztgenannte Querrohr 18 kann direkt am Unterrahmen 5 gelagert sein oder mittels weiterer Lagervorrichtungen 20. Die anderen Enden der einander entsprechenden Schwingen 8a oder 8b sind mittels weiterer Querrohre fest miteinander verbunden, wobei diese vorderen Querrohre die Rollen lagern.

Der Oberrahmen 7 (und der Unterrahmen 5) weist ein C-förmiges Profil auf, welches in Sitzquerrichtung y zum Querrohr 18 hin offen ist und auf beiden Fahrzeugsitzseiten die zugeordnete Lagervorrichtung 20 aufnimmt. Die Lagervorrichtung 20 weist eine Führung 21 auf, welcher am Oberrahmen 7 (oder am Unterrahmen 5) befestigt ist, beispielsweise mittels Schrauben. Die Führung 21 ist als kastenförmige, weitgehend geschlossene Einheit ausgebildet. Das Querrohr 18 ragt durch eine Öffnung 21 a in die Führung 21 hinein. Die Führung 21 weist in ihrem Inneren eine sich in Sitzlängsrichtung x erstreckende Führungsbahn 21 b für eine Lagerrolle 22 auf. Die Führungsbahn 21b weist vorzugsweise einen horizotalen (d.h. in Sitzlängsrichtung x und in Sitzquerrichtung y verlaufenden) Bereich und in Sitzlängsrichtung x beidseitig jeweils anschließend einen nach oben (in Hauptschwingrichtung z) gezogenen Bereich auf, beispielsweise ein Viertelszylinder. Die Lagerrolle 22 ist drehbar am Ende des Querrohrs 18 gelagert. Vorzugsweise ist die Lagerrolle 22 ein Ring, der mittels eines Nadellagers auf dem - im Durchmesser reduzierten - Endabschnitt des Querrohrs 18 gelagert ist.

Die Führung 21 weist seitlich der Führungsbahn 21 b zwei Endanschläge 21 c zum Zusammenwirken mit dem Querrohr 18 auf. Die beiden Endanschläge 21 c sind in Sitzlängsrichtung x vor und hinter dem Querrohr 18 angeordnet. Die Lagerrolle 22 kann in jeweils eine Richtung an der Führungsbahn 21b abrollen, bis das Querrohr 18 in Anlage an den zugeordneten Endanschlag 21 c gelangt. Die Öffnung 21 a ist entsprechend dieser Bewegung als Langloch ausgebildet. Die beiden Endanschläge 21 c sind vorzugsweise aus Gummi, EPDM oder einem anderen Elastomer oder sonstigen Kunststoff gefertigt. Die beiden Endanschläge 21 c nehmen kinetische Energie als elastische Energie auf und können diese vorzugsweise auch (wenigstens teilweise) dissipieren, d.h. sie wirken vorzugsweise dämpfend. Das Dämpfungsverhalten ist durch die Form der Endanschläge 21c vorgebbar.

Auf einer der beiden Fahrzeugsitzseiten, alternativ auf beiden, ist die Lagervorrichtung 20 mit einer Schwingvorrichtung 25 kombiniert, welche eine Schwingung des Oberrahmens 7 in Sitzlängsrichtung x (Horizontalschwingung) relativ zu den Schwingen 8a, 8b ermöglicht, die unabhängig von der Schwingung in der Hauptschwingrichtung z ist. In Sitzlängsrichtung x auftretende Kraftstösse, beispielsweise aufgrund von Fahrbahnunebenheiten oder aufgrund des Ankuppelns von Anhängern an das Nutzfahrzeug, oder deren entsprechende Komponenten in Sitzlängsrichtung x werden so vom Scherengestell 3 aufgenommen und gedämpft, anstatt dass sie auf den Insassen übertragen werden. Dies steigert den Sitzkomfort.

Hierzu ist am Querohr 18 ein Anker 26 angelenkt, vorliegend indem das Querrohr 18 durch eine Lagerbuchse gesteckt ist, die in einem Lagerauge des Ankers 18 sitzt, so dass sich das Querrohr 18 noch drehen kann. Der Anker 26 ist vom Querrohr 18 aus in Sitzlängsrichtung x innerhalb des Profils des Oberrahmens 7 nach vorne geführt. Zwischen dem Anker 26 und dem Oberrahmen 7 ist eine Federanordnung vorgesehen, vorliegend zwei Federn 27. Die beiden Federn 27, die vorzugsweise als Schrauben-Zugfedern ausgebildet sind, sind jeweils an einem Ende am Anker 26 befestigt, vorzugsweise eingehängt. Von den beiden Federn 27 ist in Sitzlängsrichtung x eine vordere Feder 27 nach vorne und eine hintere Feder 27 nach hinten geführt. Die beiden Federn 27 sind jeweils an ihrem anderen Ende - unter Vorspannung - am Oberrahmen 7 befestigt, vorzugsweise eingehängt. Die hintere Feder 27 kann auch an der Lagervorrichtung 20 eingehängt sein.

Die Horizontalschwingungen des Oberrahmens 7 sind um die Mittellage herum, also wenn bei kleinen Auslenkungen nur die Federn 27 wirksam sind, ungedämpft, während sie ab dem Kontakt mit den Endanschlägen 21 c, also wenn diese bei großen Auslenkungen wirksam werden, gedämpft werden. Optional kann auf der gegenüberliegenden Fahrzeugsitzseite, wo keine Schwingvorrichtung 25 vorhanden sein muss, ein zusätzlicher Dämpfer zwischen einem entsprechenden Anker 26 und dem Oberrahmen 7 vorgesehen sein, der dann über den gesamten Bereich der Horizontalschwingungen wirksam sein kann.

Um die Horizontalschwingungen im Bedarfsfall unterdrücken zu können, ist die Schwingvorrichtung 25 mit einer Verriegelungsvorrichtung 30 kombiniert. Die in Sitzlängsrichtung x vor der Lagervorrichtung 20 angeordnete Verriegelungsvorrichtung 30 weist einen Träger 31 auf, der im Abstand zum Anker 26 angeordnet ist, vorzugsweise innerhalb des Profils des Oberrahmens 7. Der Träger 31 ist am Oberrahmen 7 befestigt, beispielsweise in Sitzquerrichtung y abstehender Schrauben. Der Träger 31 lagert einen Lagerbolzen 32. Der Lagerbolzen 32 steht zum Anker 26 hin vom Träger 31 ab und ragt durch eine Kulisse 26b des Ankers 26. Durch einen Kopf, vorliegend auf der vom Träger 31 abgewandten Seite des Ankers 26, und durch eine aufgeschraubte Mutter, vorliegend auf der vom Anker 26 abgewandten Seite des Trägers 31, ist der Lagerbolzen 32 axial gesichert.

Ein Verriegelungshebel 34 der Verriegelungsvorrichtung 30 ist mittels des Lagerbolzens 32 schwenkbar am Träger 31 gelagert. Der zweiarmige Verriegeungshebel 34 weist an einem Arm ein Verriegelungselement 36 auf, vorliegend ein Bolzen. Wenn das Verriegelungselement 36 mit einer Verriegelungsaufnahme 26c am Anker 26 zusammenwirkt, also in selbige eingreift, sind der Anker 26 und der Träger 31 miteinander verriegelt und dadurch das Querrohr 18 mit dem Oberrahmen 7. Eine Verriegelungsfeder 37, die zwischen Verriegelungshebel 34 und Träger 31 wirkt, definiert durch ihre Vorspannung die Ausgangsstellung die Verriegelung, beispielsweise den geöffneten Zustand. Am anderen Arm des Verriegelungshebels 34 ist ein Bowdenzug 38 eingehängt, dessen Hülle mittels eines Halters 39 am Oberrahmen 7 abgestützt ist. Der Bowdenzug 38 ist vorzugsweise zum vorderen Ende des Oberrahmens 7 geführt, wo er an einem Bedienelement endet, welches vom Insassen des Fahrzeugsitzes 1 zu betätigen ist und welches - zur Vorspannung der Verriegelungsfeder 37 passende - Mittel zum Sperren des Bowdenzuges 38 aufweist.

Mittels der Verriegelungsvorrichtung 30 können die Horizontalschwingungen verhindert oder zugelassen werden, und zwar umschaltbar je nach dem, ob die Verriegelungsvorrichtung 30 verriegelt oder entriegelt ist. Die Drehbewegung des Querrohres 18 um seine eigene Achse, welche bei der Schwenkbewegung der ersten Schwingen 8a auftritt, erlaubt die Verriegelungsvorrichtung 30 in beiden Schaltzuständen.

### Bezugszeichenliste

| | |
|---|---|
| 1 | Fahrzeugsitz |
| 3 | Scherengestell |
| 5 | Unterrahmen |
| 7 | Oberrahmen |
| 8a | erste Schwinge |
| 8b | zweite Schwinge |
| 10 | Scherenachse |
| 12 | Feder |
| 15 | Sitzschiene |
| 16 | Sitzrahmen |
| 17 | Lehne |
| 18 | Querrohr |
| 20 | Lagervorrichtung |
| 21 | Führung |
| 21a | Öffnung |
| 21b | Führungsbahn |
| 21c | Endanschlag |
| 22 | Lagerrolle |
| 25 | Schwingvorrichtung |
| 26 | Anker |
| 26b | Kulisse |
| 26c | Verriegelungsaufnahme |
| 27 | Feder |
| 30 | Verriegelungsvorrichtung |
| 31 | Träger |
| 32 | Lagerbolzen |
| 34 | Verriegelungshebel |
| 36 | Verriegelungselement |
| 37 | Verriegelungsfeder |
| 38 | Bowdenzug |
| 39 | Halter |
| x | Sitzlängsrichtung |
| y | Sitzquerrichtung |
| z | Hauptschwingrichtung |

## Patentansprüche

1. Fahrzeugsitz, insbesondere Nutzfahrzeugsitz, mit einem in einer Hauptschwingrichtung (z) schwingfähigen Scherengestell (3), welches einen Oberrahmen (7), zwei erste Schwingen (8a) und zwei zweite Schwingen (8b), die sich paarweise an einer in Sitzquerrichtung (y) verlaufenden Scherenachse (10) kreuzen, aufweist, wobei die beiden ersten Schwingen (8a) an einem Ende mittels eines in Sitzquerrichtung (y) verlaufenden Querrohrs (18) miteinander verbunden sind, das mittels wenigstens einer Lagervorrichtung (20) am Oberrahmen (7) drehbar gelagert, wobei Horizontalschwingungen des Oberrahmens (7) in Sitzlängsrichtung (x) bei kleinen Auslenkungen durch wenigstens eine Schwingvorrichtung (25) ungedämpft und bei großen Auslenkungen durch die Lagervorrichtung (20) gedämpft sind, **dadurch gekennzeichnet, dass** der Oberrahmen (7) mittels der Schwingvorrichtung (25) relativ zum Querrohr (18) in Sitzlängsrichtung (x) schwingfähig ist, wobei die Lagervorrichtung (20) eine Führung (21) mit einer Führungsbahn (21b) für eine Lagerrolle (22) am Querrohr (18) und seitlich der Führungsbahn (21b) zwei als Dämpfer ausgebildete Endanschläge (21 c) für das Querrohr (18) aufweist, welche bei großen Auslenkungen der Horizontalschwingungen des Oberrahmens (7) wirksam werden.

2. Fahrzeugsitz nach Anspruch 1, **dadurch gekennzeichnet, dass** die Schwingvorrichtung (25) wenigstens eine Feder (27) aufweist, welche zwischen einem am Querrohr (18) angelenkten Anker (26) und dem Oberrahmen (7) wirksam ist.

3. Fahrzeugsitz nach Anspruch 2, **dadurch gekennzeichnet, dass** die Schwingvorrichtung (25) zwei vorgespannte Federn (27) aufweist, von denen eine Feder (27) vom Anker (26) aus in Sitzlängsrichtung (x) nach vorne und eine Feder (27) vom Anker (26) aus in Sitzlängsrichtung (x) nach hinten geführt ist.

4. Fahrzeugsitz nach einem der vorhergehenden Ansprüche 4, **dadurch gekennzeichnet, dass** die Führung (21) als kastenförmige, weitgehend geschlossene Einheit ausgebildet ist, in welche das Querrohr (18) durch eine Öffnung (21 a) hineinragt.

5. Fahrzeugsitz nach einem der vorhergehenden Ansprüche, **dadurch gekennzeichnet, dass** die Endanschläge (21c) aus Gummi, EPDM oder einem anderen Elastomer gefertigt sind, welches Energie dissipiert.

6. Fahrzeugsitz nach einem der vorhergehenden Ansprüche, **dadurch gekennzeichnet, dass** das Querrohr (18) mittels wenigstens einer Verriegelungsvorrichtung (30) mit dem Oberrahmen (7) verriegelbar ist.

7. Fahrzeugsitz nach Anspruch 2 und 6, **dadurch gekennzeichnet, dass** die Verriegelungsvorrichtung (30) den Oberrahmen (7) mit dem Anker (26) der Schwingvorrichtung (25) verriegelt.

8. Fahrzeugsitz nach Anspruch 6 oder 7, **dadurch gekennzeichnet, dass** die Verriegelungsvorrichtung (30) einen Träger (31) und einen am Träger (31) angelenkten Verriegelungshebel (34) aufweist, welcher ein Verriegelungselement (36) und eine Verriegelungsaufnahme (26c) zum Zusammenwirken bringt.

9. Fahrzeugsitz nach Anspruch 7 und 8, **dadurch gekennzeichnet, dass** der Verriegelungshebel (34) das Verriegelungselement (36) und der Anker (26) die Verriegelungsaufnahme (26c) aufweist.

10. Fahrzeugsitz nach Anspruch 8 oder 9, **dadurch gekennzeichnet, dass** der Verriegelungshebel (34) mittels eines Lagerbolzens (32) am Träger (31) angelenkt ist, wobei der Lagerbolzen (32) durch eine Kulisse (26b) des Ankers (26) ragt und axial gesichert ist.

11. Fahrzeugsitz nach einem der Ansprüche 8 bis 10, **dadurch gekennzeichnet, dass** der Verriegelungshebel (34) mittels einer Verriegelungsfeder (37) gegenüber dem Träger (31) vorgespannt und mittels eines Bowdenzuges (38) schwenkbar ist.

## Claims

1. A vehicle seat, in particular commercial vehicle seat, with a scissor frame (3) that can oscillate in a primary direction of oscillation (z) and has a top frame (7), two first links (8a) and two second links (8b) that intersect in pairs at a scissor axis (10) running in the direction transversal to the seat (y), wherein the two first links (8a) are connected to each other at one end by means of a transverse tube (18) that runs in the direction transversal to the seat (y) and is rotatably mounted to the top frame (7) by means of at least one bearing device (20), wherein horizontal oscillations of the top frame (7) are undamped in the longitudinal direction of the seat (x) by at least one oscillating device (25) when there are small deflections, and are damped by the bearing device (20) when there are large deflections, **characterized in that** the top frame (7) can vibrate in the longitudinal direction of the seat (x) relative to the transverse tube (18) by means of the oscillating device (25), wherein the bearing device (20) has a guide (21) with a guide path (21 b) for a bearing roller (22) on the transverse tube (18), and has two end stops (21 c) for the transverse tube (18) on the side of the guide path (21 b) that are formed as dampers and become operative when the deflections of the horizontal osciallations of the top frame (7) are large.

2. The vehicle seat according to claim 1, **characterized in that** the oscillating device (25) has at least one spring (27) that acts between an anchor (26) articulated to the transverse tube (18) and the top frame (7).

3. The vehicle seat according to claim 2, **characterized in that** the oscillating device (25) has two pretensioned springs (27), of which one spring (27) is guided to the front from the anchor (26) in the longitudinal direction of the seat (x), and one spring (27) is guided to the rear from the anchor (26) in the longitudinal direction of the seat (x).

4. The vehicle seat according to one of the prior claims 4, **characterized in that** the guide (21) is designed as a box-shaped, largely enclosed unit in which the transverse tube (18) extends through an opening (21 a).

5. The vehicle seat according to one of the prior claims, **characterized in that** the end stops (21c) are made of a rubber, EPDM or another elastomer that dissipates energy.

6. The vehicle seat according to one of the prior claims, **characterized in that** the transverse tube (18) can be locked to the top frame (7) by means of at least one locking device (30).

7. The vehicle seat according to claim 2 and 6, **characterized in that** the locking device (30) locks the top frame (7) to the anchor (26) of the oscillating device (25).

8. The vehicle seat according to claim 6 or 7, **characterized in that** the locking device (30) has a holder (31) and a locking lever (34) articulated to the holder (31) that causes a locking element (36) and a lock seat (26c) to interact.

9. The vehicle seat according to claim 7 and 8, **characterized in that** the locking lever (34) has the locking element (36), and the anchor (26) has the lock seat (26c).

10. The vehicle seat according to claim 8 or 9, **characterized in that** the locking lever (34) is articulated to the holder (31) by means of a bearing bolt (32), wherein the bearing bolt (32) extends through a gate (26b) of the anchor (26) and is axially secured.

11. The vehicle seat according to one of claims 8 to 10, **characterized in that** the locking lever (34) is pretensioned relative to the holder (31) by means of a locking spring (37) and can be pivoted by means of a Bowden cable (38).

## Revendications

1. Siège pour véhicule, en particulier pour véhicule utilitaire, comprenant un support extensible (3) capable d'osciller dans une direction d'oscillation principale (z), lequel comporte un cadre supérieur (7), deux premières bras (8a) et deux secondes bras (8b) qui se croisent deux à deux au niveau d'un axe extensible (10) s'étendant dans la direction transversale du siège (y), les deux premières bras (8a) étant reliées entre elles à une extrémité au moyen d'un tube transversal (18) s'étendant dans la direction transversale du siège (y), qui est monté rotatif sur le cadre supérieur (7) au moyen d'au moins un dispositif de palier (20), des oscillations horizontales du cadre supérieur (7) étant entretenues dans la direction longitudinale du siège (x) par au moins un dispositif oscillant (25) en cas de faibles déviations, et étant amorties par le dispositif de palier (20) en cas de déviations importantes, **caractérisé en ce que** le cadre supérieur (7) est capable d'osciller au moyen du dispositif oscillant (25) par rapport au tube transversal (18) dans la direction longitudinale du siège (x), le dispositif de palier (20) comprenant un guidage (21) avec une glissière de guidage (21b) pour un rouleau de palier (22) sur le tube transversal (18) et, dans la partie latérale de la glissière de guidage (21b), deux butées finales se présentant sous forme d'amortisseurs (21c) pour le tube transversal (18), qui sont efficaces en cas de déviations importantes des oscillations horizontales du cadre supérieur (7).

2. Siège pour véhicule selon la revendication 1, **caractérisé en ce que** le dispositif oscillant (25) comporte au moins un ressort (27) qui est efficace entre un noyau d'induit (26) articulé sur le tube transversal (18) et le cadre supérieur (7).

3. Siège pour véhicule selon la revendication 2, **caractérisé en ce que** le dispositif oscillant (25) comprend deux ressorts précontraints (27), dont un ressort (27) est dirigé vers l'avant depuis le noyau d'induit (26) dans la direction longitudinale du siège (x) et dont un ressort (27) est dirigé vers l'arrière depuis le noyau d'induit (26) dans la direction longitudinale du siège (x).

4. Siège pour véhicule selon une des revendications précédentes 4, **caractérisé en ce que** le guidage (21) se présente sous forme d'unité largement fermée en forme de boîtier dans laquelle dépasse le tube transversal (18) à travers un orifice (21a).

5. Siège pour véhicule selon une des revendications précédentes, **caractérisé en ce que** les butées finales (21c) sont fabriquées en caoutchouc, en EPDM ou dans un autre élastomère qui dissipe l'énergie.

6. Siège pour véhicule selon une des revendications précédentes, **caractérisé en ce que** le tube transversal (18) est verrouillable avec le cadre supérieur (7) au moyen d'au moins un dispositif de verrouillage (30).

7. Siège pour véhicule selon les revendications 2 et 6, **caractérisé en ce que** le dispositif de verrouillage (30) verrouille le cadre supérieur (7) avec le noyau d'induit (26) du dispositif oscillant (25).

8. Siège pour véhicule selon les revendications 6 ou 7, **caractérisé en ce que** le dispositif de verrouillage (30) comporte un support (31) et un levier de verrouillage (34) articulé sur le support (31) qui amène en coopération un élément de verrouillage (36) et un logement de verrouillage (26c).

9. Siège pour véhicule selon les revendications 7 et 8, **caractérisé en ce que** le levier de verrouillage (34) comprend l'élément de verrouillage (36) et le noyau induit (26) le logement de verrouillage (26c).

10. Siège pour véhicule selon les revendications 8 ou 9, **caractérisé en ce que** le levier de verrouillage (34) est articulé au moyen d'un boulon de palier (32) sur le support (31), le boulon de palier (32) ressortant à travers une coulisse (26b) du noyau d'induit (26) et étant fixé axialement.

11. Siège pour véhicule selon une des revendications 8 à 10, **caractérisé en ce que** le levier de verrouillage (34) est précontraint au moyen d'un ressort de verrouillage (37) par rapport au support (31) et est pivotant au moyen d'un câble Bowden (38).
